# EUROPEAN PATENT SPECIFICATION

(11) **EP 1 634 922 B1**
(45) Date of publication and mention of the grant of the patent: **08.09.2010**
(21) Application number: 04746313.8
(22) Date of filing: 17.06.2004
(51) Int. Cl.: C08L 33/20, C08L 65/00, C09D 5/24, H01B 1/12, H01G 9/00

(54) **CONDUCTIVE COMPOSITION, CONDUCTIVE COATING MATERIAL, CONDUCTIVE RESIN, CAPACITOR, PHOTO-ELECTRIC CONVERTING ELEMENT, AND PROCESS FOR PRODUCING THE SAME**
LEITFÄHIGE ZUSAMMENSETZUNG, LEITFÄHIGES BESCHICHTUNGSMATERIAL, LEITFÄHIGES HARZ, KONDENSATOR, ELEMENT ZUR PHOTOELEKTRISCHEN UMWANDLUNG UND HERSTELLUNGSVERFAHREN DAFÜR
COMPOSITION CONDUCTRICE, ENDUIT CONDUCTEUR, RESINE CONDUCTRICE, CONDENSATEUR, ELEMENT CONVERTISSEUR PHOTO-ELECTRIQUE ET PROCEDE DE PRODUCTION ASSOCIE

(30) Priority: 18.06.2003 JP 2003173429; 20.06.2003 JP 2003176426; 03.09.2003 JP 2003311929; 05.11.2003 JP 2003375667; 21.01.2004 JP 2004013032; 04.02.2004 JP 2004027627; 02.04.2004 JP 2004109702
(43) Date of publication of application: 15.03.2006
(60) Divisional application: 07025102.0
(73) Proprietor: SHIN-ETSU POLYMER CO., LTD., Tokyo 103-0023 (JP)
(72) Inventor: YOSHIDA, Kazuyoshi, Shin-Etsu Polymer Co., Ltd., Tokyo 103-0023 (JP); KAWAGUCHI, Toshiyuki, Shin-Etsu Polymer Co., Ltd., Tokyo 103-0023 (JP); NING, Tailu, Shin-Etsu Polymer Co., Ltd., Tokyo 103-0023 (JP); MASAHIRO, Yasushi, Shin-Etsu Polymer Co., Ltd., Tokyo 103-0023 (JP)
(74) Representative: Berkenbrink, Kai-Oliver
(86) International application number: PCT/JP2004/008844
(87) International publication number: WO 2004/113441

(56) References cited:
- JP-A- 5 009 308
- JP-A- 6 020 692
- JP-A- 2001 135 551
- JP-A- 2002 265 781
- JP-A- 2004 175 373
- JP-A- 2004 212 993

## Description

### (Background Art of First and Second Aspects)

π-conjugated conductive polymers such as polypyrrole, polythiophene, poly N-methylpyrrole, poly 3-methylthiophene and poly 3-methoxythiophene have conventionally been used not only for general antistatic materials, but also for antistatic packaging materials of precision electronic equipments, components for electrophotographic equipments such as transfer belt, and electronic components such as functional capacitor.

However, these conductive polymers have so-called insoluble and infusible properties, that is, they are insoluble in any solvents and are discomposed before heating to a melting point.

Therefore, various proposals have conventionally been made so as to mold these conductive polymers.

Japanese Unexamined Patent Application, First Publication No. Sho 62-275137 discloses a method comprising dipping a molded article in a solution prepared by adding a dopant such as organic sulfonic acid, an inorganic acid, and an oxidizing agent to a monomer capable of forming a conductive polymer, thereby to polymerize the monomer and to directly deposit the conductive polymer on the surface of the molded article (dip polymerization method).

Published Japanese Translation No. Hei 10-507225 of the PCT Application discloses a method comprising dissolving polypyrrole in a solvent using dodecylbenzenesulfonic acid (DBSA) as a dopant. According to this method, since a polypyrrole solution can be applied onto the surface of a molded article, it is not necessary to dip the molded article in the solution.

In Japanese Unexamined Patent Application, First Publication No. Hei 7-105718, a water-soluble polyaniline is obtained by polymerizing aniline in the presence of a polyelectrolyte having a sulfonic acid group, a carboxylic acid group and the like. According to this method, there can be obtained a product which is dispersed in water or high polar solvent in nanometer order and is seemed to be dissolved, and also behaves as a dissolved material in view of performances. When the resulting product is dissolved in an aqueous polymer to prepare a conductive polymer solution, excellent antistatic material is obtained and is therefore suited for use as a conductivity imparting material for an aqueous polymer.

However, the method described in Japanese Unexamined Patent Application, First Publication No. Sho 62-275137 had a problem that, since entire molded article is dipped, a large-sized apparatus must be used for a large-sized molded article, resulting in large loss of the material.

The method described in Published Japanese Translation No. Hei 10-507225 of the PCT Application had the following problem. Since DBSA having a surfactant structure in water is used, a polymer structure as described in the document can be obtained in case of polymerizing a pyrrole monomer which is slightly soluble in water. However, when using a monomer having poor water solubility such as thiophene, alkylpyrrole or alkylthiophene, it exhibits a colloidal state in water. Even if the colloidal monomer is polymerized, there can be obtained only a conductive polymer in the form of microparticles comprising colloidal microparticles whose surface are doped with DBSA, and thus the resulting conductive polymer in the form of microparticles has no solvent solubility.

The method described in Japanese Unexamined Patent Application, First Publication No. Hei 7-105718 had the following problem. The polyelectrolyte having a sulfonic acid group and a carboxylic acid group itself is a polymer having ionic conductivity and therefore exhibits strong ionic conductivity and the conductivity is greatly influenced by humidity of the operating environment. Therefore, it could not be used in the field to which stability of conductivity is required under any environment. Furthermore, the existence of a sulfonic acid group and a carboxylic acid group of the polyelectrolyte is unpreferable in the field of electrical and electronic components which are easily affected by corrosion.

Since the polyelectrolyte described above itself is water soluble, when a conductive polymer solution is applied onto the desired position to form a coating film, the resulting coating film is inferior in water resistance and was easily wiped off by water or alcohol. Furthermore, the polyelectrolyte has no heat resistance with respect to exhibition of conductivity and therefore it could not be used as electronic components which require reliability under high temperature conditions.

An object of the first aspect is to provide a conductive polymer composition, a conductive coating material and a conductive resin, which are excellent in moldability and are soluble in an organic solvent having a SP value (solubility parameter: unit [(cal/cm⁻³)^{1/2}]) within a wide range and have no ionic conductivity.

Furthermore, an object of the first aspect is to provide a conductive composition which can be used for various purposes because, after forming into a coating film or a molded article using a conductive coating material or a conductive resin, the resulting coating film or molded article is not dissolved in water or a solvent and has high heat resistance.

### (Background Art of second Aspect)

With recent digitalization of electronic equipments, it is requested for a capacitor used herein to decrease impedance in high frequency range. To comply with this request, for example, a so-called a functional capacitor comprising an anode made of a porous material of a valve metal such as aluminum, tantalum or niobium, a dielectric layer made of an oxide film of the valve metal, and a cathode comprising a solid electrolyte layer, a carbon layer and a silver layer which are laminated with each other has been used (see, for example, Japanese Unexamined Patent Application, First Publication No. 2003-37024).

The solid electrolyte layer of the functional capacitor is made of a π-conjugated conductive polymer such as pyrrole, thiophene and the like. The π-conjugated conductive polymer plays a role of penetrating into a porous material thereby to contact furthermore with a dielectric layer having a larger area and to achieve high capacitance, and also repairing the defective portion of the dielectric layer with a π-conjugated conductive polymer thereby to prevent leakage from the defective portion of the dielectric layer caused by to leakage current.

Since performances of the solid electrolyte layer are further improved in case of low equivalent series resistance (ESR), high conductivity is required so as to achieve low ESR. Furthermore, those having excellent heat resistance are required because the operating environment of the capacitor becomes severe.

As a method of forming a solid electrolyte layer containing a π-conjugated conductive polymer on a dielectric layer, an electrolytic polymerization or chemical polymerization method can be employed.

In the electrolytic polymerization disclosed in Japanese Unexamined Patent Application, First Publication No. Sho 63-158829, after forming a conductive layer made of manganese oxide on the surface of the porous material of the valve metal, electrolytic polymerization of a conductive polymer must be conducted using the conductive layer as an electrode. However, it is very complicated to electrolytically polymerize the conductive polymer layer after forming the conductive layer and manganese oxide has low conductivity, and therefore the effect of using the conductive polymer having high conductivity was lowered.

In the chemical polymerization disclosed in Japanese Unexamined Patent Application, First Publication No. Sho 63-173313, although a monomer is polymerized on a dielectric layer, productive efficiency of the capacitor drastically decreased because of long polymerization time. Moreover, since the oxidizing agent cannot be sufficiently washed, the surface of the dielectric layer is attacked by the oxidizing agent and thus leakage current characteristics and moisture resistance deteriorate.

In Japanese Unexamined Patent Application, First Publication No. Sho 63-158829 and Japanese Unexamined Patent Application, First Publication No. Sho 63-173313, electrolytic polymerization and chemical polymerization are conducted in the process for the production of the capacitor and there was a problem such as complicated process. Thus, as described in Japanese Unexamined Patent Application, First Publication No. Hei 7-105718, there is made such an attempt that aniline is polymerized in the presence of a polyelectrolyte having a sulfo group, a carboxyl group and the like to obtain a water-soluble polyaniline and an aqueous solution thereof is applied and dried, thereby to simplify the process. However, since the solvent is water, surface tension is large and permeability into the porous material is inferior, and also conductivity was low because it is not a conductive polymer alone. Furthermore, since the resulting solid electrolyte layer contains a polyelectrolyte, conductivity may be temperature-dependent.

To enhance conductivity of the solid electrolyte layer, as disclosed in Japanese Unexamined Patent Application, First Publication No. Hei 11-74157, there is made an attempt of preparing while highly controlling the polymerization conditions in the chemical polymerization. In that case, the complicated process becomes more complicated and is an obstacle to simplification of the process and cost reduction.

An object of the present aspect is to provide a conductive composition capable of forming a solid electrolyte layer having excellent conductivity and heat resistance by simple processes such as application and drying processes, and a method for producing the same, as well as a conductive coating material. Another object is to provide a capacitor using the conductive composition, and a method for producing the same.

### DISCLOSURE OF THE INVENTION

### (Disclosure of First Aspect)

The present inventors have found that, in case of polymerizing a material to obtain a conductive polymer in the presence of a polymer compound having a cyano group, the resulting conductive polymer has solvent solubility and moldability, and also a conductive composition having no ionic conductivity is obtained. Also, they have found that there can be obtained a conductive composition, wherein it is soluble in solvents having various SP values and a melting temperature thereof can be controlled and it also can be mixed with various insulating resins, by using a copolymer of a compound having a vinyl group and acrylonitrile or methacrylonitrile as the polymer compound. Thus, the present aspect has been completed.

The first aspect of the present invention is directed to a conductive composition comprising a π-conjugated conductive polymer and a cyano group-containing polymer compound, which is a copolymer of a cyano group-containing monomer and a vinyl group-containing monomer, wherein
a copolymerization molar ratio of the cyano group-containing monomer to the vinyl group-containing monomer in the cyano group-containing polymer compound is from 99:1 to 10:90, and
a mass ratio of the cyano group-containing polymer compound to the π-conjugated conductive polymer is from 5:95 to 99:1.
Also, they have found that, when the conductive composition contains a curing agent and is dissolved in an organic solvent or mixed with a resin, the cyano group-containing polymer compound is crosslinked by the curing agent to obtain a coating material and a resin which are excellent in solvent resistance and heat resistance. Thus, the present aspect has been completed.

### (Disclosure of second Aspect)

The second aspect of the present invention provides a conductive composition comprising a conductive filler and a conductive mixture of a cyano group-containing polymer compound, which is a copolymer of a cyano group-containing monomer and a vinyl group-containing monomer, and a π-conjugated conductive polymer. Also, the second aspect of the present invention provides a method for preparing a conductive composition, which comprises polymerizing a precursor monomer of a π-conjugated conductive polymer in the presence of a cyano group-containing polymer compound to provide a conductive mixture, and mixing the conductive mixture with a conductive filler.

### BEST MODE FOR CARRYING OUT THE INVENTION

Preferred examples of the present invention will now be described. However, the present invention is not limited to the following examples. For example, constituent elements of these examples and aspects can be corresponded or appropriately combined with each other.

### (Best Mode of First Aspect)

### [π-Conjugated Conductive Polymer]

Examples of the π-conjugated conductive polymer in the present aspect include substituted or unsbstituted polyaniline, substituted or unsbstituted polypyrrole, substituted or unsbstituted polythiophene, copolymers of one or more kinds selected from them, and (co)polymers of one or more kinds selected from aniline, pyrrole, thiophene and derivatives thereof. Particularly, polypyrrole, polythiophene, poly N-methylpyrrole, poly 3-methylthiophene, poly 3-methoxythiophene, and copolymer of two or more kinds selected from them are advantageously used in view of cost and reactivity.

Particularly, alkyl-substituted compounds such as poly N-methylpyrrole and poly 3-methylthiophene are advantageous because the effect of improving solvent solubility is obtained. Among alkyl groups, a methyl group is preferable because conductivity is not adversely affected.

### [Cyano Group-Containing Polymer Compound]

Examples of the cyano group-containing polymer compound include a polymer of a cyano group-containing monomer described hereinafter, a copolymer of a cyano group-containing monomer and a vinyl group-containing monomer, a cyanoethyl cellulose resin having a cyanoethylated hydroxyl group and a polyallylamine resin having a cyanoethylated amino group.

Among these, resins soluble in solvents having a SP value (solubility parameter: unit [(cal/cm⁻³)^{1/2}]) within a wide range are preferable. When using the copolymer of a cyano group-containing monomer and a vinyl group-containing monomer, solubility of the cyano group-containing polymer compound in a solvent can be controlled to obtain a cyano group-containing polymer compound, which is soluble in solvents wherein SP values thereof are within a wide range.

### [Cyano Group-Containing Monomer]

The cyano group-containing monomer is a compound which has a cyano group in the molecule and is polymerizable independently or copolymerizable with the other monomer. The monomer is preferably a cyano group-containing vinyl-based monomer compound such as acrylonitrile or methacrylonitrile because it is easily polymerized and a copolymer is easily obtained. These monomers may be used alone or in combination. Since acrylonitrile and methacrylonitrile have a cyano group and a vinyl group in the molecule, polyacrylonitrile and polymethacrylonitrile can be used as the cyano group-containing polymer compound in the present aspect.

### [Vinyl Group-Containing Monomer]

The vinyl group-containing monomer is a polymerizable compound which has one or more carbon-carbon double bonds in the molecule. Preferable vinyl monomers are vinyl halide compounds, aromatic vinyl compounds, heterocyclic vinyl compounds, aliphatic vinyl compounds, acrylic compounds, diene compounds and maleimide compounds.

Examples of the vinyl halide compound include vinyl chloride and vinyl fluoride. Examples of the aromatic vinyl compound include styrene, α-methylstyrene, p-dodecylstyrene and p-octadecylstyrene. Examples of the heterocyclic vinyl compound include vinylpyridine. Examples of the aliphatic vinyl compound include linear hydrocarbons having one double bond in the molecule, such as propene, butene, pentene, hexene, octane and dodecene. Examples of the acrylic compound include ethyl acrylate, butyl acrylate, 2-ethylhexyl acrylate, lauryl acrylate, methyl methacrylate, acrylic acid, methacrylic acid and acrylamide.

Typical examples of the diene compound include butadiene. Examples of the maleimide compound include maleimide and N-substituted maleimide.

Examples of the cyano group-containing polymer compound which is obtained with a vinyl group-containing monomer and a cyano group-containing monomer include; acrylonitrile-styrene resin, acrylonitrile-butadiene resin and acrylonitrile-butadiene-styrene resin.

Solubility of the cyano group-containing polymer compound in a solvent can be controlled by copolymerizing these vinyl monomers with the cyano group-containing monomer. By selecting these vinyl monomers as a copolymerization component, it becomes possible to easily dissolve a polymer compound, which contains polyacrylonitrile (SP value: 15.4) and/or polymethacrylonitrile (SP value: 10.7) having particularly high polarity as a constituent unit, in commodity solvents having low polarity, such as toluene, MEK (methyl ethyl ketone), acetone and the like.

At the same time, selection of the vinyl group-containing monomer enables adjustment of chemical properties wherein a compatibilization moiety is served for controlling compatibility when the cyano group-containing polymer compound is mixed with an insulating resin, adjustment of thermal properties such as Tg (glass transition temperature) and adjustment of physical properties such as hardness.

Therefore, compatibility with a vinyl chloride resin, a vinylidene fluoride resin and a styrene resin can be improved by copolymerizing vinyl halides such as vinyl chloride and vinyl fluoride, aromatic vinyl compounds such as styrene and α-methylstyrene, and the like. Also, it is possible to dissolve in commodity solvents such as toluene, MEK and acetone by copolymerizing with aliphatic vinyl compounds such as 1-hexene, 1-octene and 1-dodecene, aromatic vinyl compounds such as p-dodecylstyrene and p-octadecylstyrene and the like. Also, it is possible to decrease Tg and hardness by copolymerizing with heterocyclic vinyl compounds such as vinylpyridine, acrylic compound such as ethyl acrylate, butyl acrylate, 2-ethylhexyl acrylate, methyl methacrylate, and diene compounds such as butadiene. To the contrary, it is possible to increase Tg and hardness by copolymerizing with acrylic compounds such as methacrylic acid, and acrylamide, maleimides and maleimide compounds such as N-substituted maleimide.

A copolymerization molar ratio of the cyano group-containing monomer to the vinyl group-containing monomer is preferably from 99:1 to 10:90. When using a monomer having both a cyano group and a vinyl group in the cyano group-containing polymer compound, a molar ratio is calculated by regarding this monomer as the cyano group-containing monomer. Solvent solubility can be improved by adjusting the molar ratio of the cyano group-containing monomer to 99 or less. By adjusting the molar ratio to 10 or more, solubility of the π-conjugated conductive polymer can be improved, thus making it possible to prepare a uniform conductive composition solution. Furthermore, be using a curing agent, still further excellent heat resistance can be exhibited by increasing crosslink density when the conductive composition of the present aspect is used as a coating material or a resin to give a coating film or a molded article.

In case of copolymerizing the cyano group-containing monomer with the vinyl group-containing monomer, a conventional polymerization method used in the radical polymerization can be employed, and a solution polymerization method is a preferable polymerization method. As a polymerization initiator, any conventional polymerization initiator used in the radical polymerization can be used and azo type initiators such as azobisisobutyronitrile, azobisvaleronitrile are preferable polymerization initiators.

The conductive composition may contain synthetic rubber components for improving impact resistance, and age resistors, antioxidants and ultraviolet absorbers for improving environment-resistant characteristics. However, when amine compounds and the like are used as antioxidants, an action of an oxidizing agent used to polymerize the π-conjugated conductive polymer may be inhibited. Therefore, phenolic compounds are used as antioxidants in place of amine compound or, it is necessary to mix after the polymerization when amine compounds are used.

### [Vinyl Group-Containing Monomer having Functional Group]

As the vinyl group-containing monomer, it is possible to use ae vinyl group-containing monomer having a functional group. In suac a case, a curing agent capable of reacting with a cyano group and/or a functional group can be used in combination. When a cyano group-containing polymer compound having a functional group and a curing agent capable of reacting with a cyano group or the functional group are included in the composition, the cyano group-containing polymer compound can be cured by the curing agent when the composition is dissolved in an organic solvent and be used as a coating or it is used after mixing with a resin. Therefore, excellent heat resistance and solvent resistance can be exhibited.
The vinyl group-containing monomer having a functional group may be a monomer which is copolymerizable with the cyano group-containing monomer exemplified above, a functional group thereof reacts with a curing agent described hereinafter. Among vinyl group-containing monomers exemplified above, vinyl halide compounds, acrylic compounds, diene compounds, maleimide compounds and the like can be used-as the vinyl group-containing monomer having a functional group.

Copolymerization of the vinyl group-containing monomer with a cyano group-containing monomer enables the cyano group-containing polymer compound to crosslink a cyano group or a functional group in the molecule by a curing agent described hereinafter, and thus solvent resistance and heat resistance can be improved.

The functional group preferably comprises one or more kinds selected from sulfo group, carboxyl group, hydroxyl group, epoxy group and amino group in view of ease of copolymerization with the cyano group-containing monomer and good reactivity with the curing agent.

Examples of the vinyl compound having a functional group such as sulfo group, carboxyl group, hydroxyl group, epoxy group or amino group include carboxylic acid compounds such as acrylic acid and methacrylic acid; hydroxy compounds such as 2-hydroxyethyl acrylate, 2-hydroxypropyl acrylate and 4-hydroxybutyl acrylate; amide compounds such as acrylamide and methacrylamide; epoxy compounds such as glycidyl acrylate and glycidyl methacrylate; and sulfonic acid compounds such as vinylsulfonic acid, allylsulfonic acid and styrenesulfonic acid.

Therefore, examples of the cyano group-containing polymer compound comprising a vinyl group-containing monomer having a functional group include acrylonitrile-acrylic acid copolymer, acrylonitrile-methacrylic acid copolymer, acrylonitrile-2-hydroxyethyl acrylate copolymer, acrylonitrile-vinylsulfonic acid copolymer and acrylonitrile-styrenesulfonic acid copolymer.

### [Ion Concentration]

The conductive composition of the present aspect contains the above cyano group-containing polymer compound so as to obtain solvent solubility. In the present invention, conductive compositions having an ion concentration of 5000 ppm or less can be easily obtained. In the present aspect, the ion concentration is an extraction amount of ions contained per unit amount of the conductive composition. This extraction amount refers to the total ion concentration of ions of sulfuric acid, nitric acid and chlorine, which are contained in pure water at room temperature after dipping the conductive composition therein for 24 hours.

Those containing anionic substituent or halogen ion in a dopant or oxidizing agent described hereinafter may be used. In case of using the dopant and/or oxidizing agent, it is preferred to sufficiently purify the resulting composition.

When using those having an anionic substituent as a dopant, the mol number of the dopant to be mixed is preferably the same as or smaller than that of the conductive polymer to which the dopant is to be coordinated.

The oxidizing agent is preferably separated by techniques such as washing, filtration, dialysis, ion exchange, and the like after the completion of the reaction.

### [Dopant]

The conductive polymer is preferably mixed with a dopant so as to improve conductivity. As the dopant, halogen compounds, Lewis acids, proton acids and the like are usually used. Examples of the halogen compound include chlorine, bromine, iodine, iodine chloride, iodine bromide and iodine fluoride. Examples of the Lewis acid include phosphorus pentafluoride (PF₅), arsenic pentafluoride (AsF₅), SbF₅, boron trifluoride (BF₃), boron trichloride (BCl₃), boron tribromide (BBr₃), and lead pentafluoride. Examples of the proton acid include inorganic acids such as hydrochloric acid, sulfuric acid, nitric acid, phosphoric acid, fluoroboric acid, hydrofluoric acid and perchloric acid; organic acids such as organic carboxylic acid and organic sulfonic acid; organic cyano compounds; and fullerenes such as fullerene, hydrogenated fullerene, fullerene hydroxide and sulfonated fullerene.

Examples of the organic carboxylic acid include acetic acid, benzoic acid, phthalic acid, and metal salts thereof can also be used.

Examples of the organic acid include p-toluenesulfonic acid, naphthalenesulfonic acid, alkylnaphthalenesulfonic acid, anthraquinonesulfonic acid and dodecylbenzenesulfonic acid, and metal salts thereof can also be used.

Examples of the organic cyano compound include tetracyanoethylene, tetracyanoethylene oxide, tetracyanobenzene, tetracyanoquinodimethane and tetracyanoazanaphthalene.

The dopant is preferably a bulky substance having a large molecular weight because it is excellent in stability at high temperature and is less likely to cause de-doping. Among the above compounds, naphthalenesulfonic acid, alkylnaphthalenesulfonic acid, anthraquinonesulfonic acid, polystyrenesulfonic acid, polyvinylsulfonic acid, polyallylsulfonic acid, tetracyanoquinodimethane, tetracyanoazanaphthalene, fullerene, hydrogenated fullerene, sulfonated fullerene, fullerene hydroxide, polystyrenesulfonic acid, polyvinylsulfonic acid, and polyallylsulfonic acid, are preferably used.

### [Curing Agent Capable of Reacting with Cyano Group]

In the present invention, a curing agent capable of reacting with a cyano group can be preferably used.
The curing agent capable of reacting with a cyano group may be a compound having one of or two or more functional groups in a molecule, which can react with a cyano group of a cyano group-containing polymer compound in a solution or a resin when the cyano group-containing polymer compound coexist with the curing agent, thus making it possible to crosslink with the cyano group-containing polymer compound. Examples of the functional group capable of reacting with a cyano group include methylol group and chlorosulfon group. A compound having these functional groups can be used.

Bipolar compounds having a functional group such as nitron group, nitrile oxide group, nitrileimine group or sydnone group, metal oxides such as zinc oxide and copper sulfide, metal halides such as stannous chloride and zinc chloride, and organic metal salts and organic metal compounds such as copper acetylacetone can also be used because they have reactivity with a cyano group.

When the conductive composition contains a cyano group-containing polymer compound and a curing agent capable of reacting with a cyano group, the cyano group-containing polymer compound is cured by the curing agent when the composition is used as a coating material or a resin. Therefore, excellent heat resistance and solvent resistance can be exhibited in the resulting coating material or resin.
The conductive composition of the present aspect may contain synthetic rubber components for improving impact resistance, and age resistors, antioxidants and ultraviolet absorbers for improving environment-resistant characteristics. However, when amine compounds are used as antioxidants, an action of an oxidizing agent used to polymerize the π-conjugated conductive polymer may be inhibited. Therefore, phenolic compounds are used as antioxidants in place of amine compound, or it is necessary to mix after the polymerization when amine compounds are used.

### [Curing Agent Capable of Reacting with Cyano Group and/or Functional Group]

In the present invention, a curing agent capable of reacting with a cyano group and/or a functional group can be preferably included in the composition. Examples of the curing agent capable of reacting with a cyano group and/or a functional group include curing agents capable of reacting with a cyano group, curing agents capable of reacting with the functional group and curing agents having reactivity with both groups.

As the curing agent capable of reacting with a cyano group, there can be exemplified the same curing agents as those described above.

The curing agent capable of reacting with the functional group may be a compound having one or more functional groups in a molecule, wherein the functional groups are capable of reacting with the aforementioned functional group of the polymer compound. Examples of the functional group capable of reacting with the functional group of the polymer compound include thiol group, methylol group, hydroxyl group, carboxyl group, amino group, epoxy group, isocyanate group, vinyl group and chlorosulfon group, and a compound having these functional groups can be used. The curing agent to be used is selected according to the functional group of the polymer compound. That is, for example, when the functional group is a carboxyl group, curing agents having a methylol group, amino group, epoxy group or isocyanate group can be used as the curing agent.

Examples of the curing agent having reactivity with both a cyano group and the functional group include curing agents having a group such as a methylol group and a chlorosulfon group, and compounds having these functional groups can be used. For example, when the functional group in the cyano group-containing polymer compound is a carboxyl group, curing agents having a methylol group can be used.

### [Preparation Method]

In the preparation of the conductive composition of the present aspect, the cyano group-containing polymer compound is dissolved in a solvent which can dissolve the cyano group-containing polymer compound. An oxidizing agent is added dropwise to a system obtained by sufficiently mixing with a precursor monomer of a conductive polymer and the obtained solution including the polymer compound under stirring, thereby enabling the polymerization to proceed. The oxidizing agent, the residual monomer and by-product are removed from a complex of the cyano group-containing polymer compound and the conductive polymer, followed by purification to obtain a conductive composition. It is also possible to mix the conductive composition and a curing agent capable of reacting a cyano group and/or a functional gtoup to obtaint a conductive composition including the curing agent. Sice the cyano group-containing polymer compound is soluble in a solvent, it can be used after dissolving in the solvent.

As described above, since the cyano group-containing polymer compound can control the SP value (solubility parameter: unit [(cal/cm⁻³)^{1/2}]), there can be selected various solvents which dissolve the polymer compound. Examples of the solvent include hydrocarbon-based solvents containing a halogenated hydrocarbon, such as hexane, cyclohexane, toluene, xylene, benzene, styrene, dichloromethane and chloroform; alcohol-based solvents such as ethanol, butanol, isopropyl alcohol, cyclohexanol and lauryl alcohol; ether-based solvents such as diethyl ether, ethylene oxide, propylene oxide, furan and tetrahydrofuran; ketone-based solvents such as acetone, methyl ethyl ketone and cyclohexanone; ester-based solvents such as ethyl acetate, isobutyl acetate, vinyl acetate and butyrolactone; fatty acid-based solvents such as acetic anhydride and succinic anhydride; phenolic solvents such as m-cresol and nonyl phenol; and nitrogen containing compounds such as nitromethane, nitrobenzene, N-methylformamide, N,N-dimethylformamide, N,N-dimethylacetamide, acetonitrile and N-methyl-2-pyrrolidone. These solvents may be used alone or in combination.

It is important to select a solvent which dissolves the cyano group-containing polymer compound and dissolves the precursor monomer of the conductive polymer and also dissolves the oxidizing agent, thereby enabling the reaction of the precursor monomer to proceed.

Regarding a ratio of the conductive polymer to the cyano group-containing polymer compound, a mass ratio of the cyano group-containing polymer compound to the conductive polymer is preferably from 5:95 to 99:1, and more preferably from 10:90 to 90:10. By adjusting the ratio of the conductive polymer to 1 or more, a composition having sufficient conductivity can be obtained. By adjusting the ratio of the conductive polymer to 95 or less, a composition having excellent solvent solubility can be obtained.

As the oxidizing agent capable of polymerizing the conductive polymer, known oxidizing agents can be used. Examples thereof include metal halides such as ferric chloride, boron trifluoride and aluminum chloride; peroxides such as hydrogen peroxide and benzoyl peroxide; persulfates such as potassium persulfate, sodium persulfate and ammonium persulfate; ozone and oxygen.

The conductive composition thus obtained may be used alone, or may be mixed with the other insulating binder resin to give a conductive resin or a molded article as a product. The conductive composition may be dissolved in an organic solvent in order to prepare a paint.

The insulating binder resin to be mixed is not specifically limited and is preferably a resin which is excellent in compatibility and dispersibility with the conductive composition and does not exhibit ionic conductivity. A mixture of one or more resins selected from acrylic resins, urethane-based resins, fluorine-based resins, imide-based resins and epoxy-based resins is a preferable resin.

It is preferred to adjust a difference in SP value between the polymer resin compound and the insulating resin within a range from 0 to 2 so as to maintain compatibility with the insulating resin to be mixed. As described above, it is possible to control SP value by control of the composition of the cyano group-containing polymer compound by selecting a vinyl group-containing monomer to be copolymerized with a cyano group-containing monomer.

The SP values of the cyano group-containing polymer compound and the insulating resin can be determined as an average value of the SP value of a solvent capable of dissolving each resin after a dissolution test was conducted using various solvents having different SP values described below. As a series of solvents used in the measurement of the SP value, for example, there can be used n-pentane (SP = 7.0), n-heptane (SP = 7.4), methylcyclohexane (SP = 7.8), toluene (SP = 8.9), tetralin (SP = 9.5), o-dichlorobenzene (SP = 10.0), 1-bromonaphthalene (SP = 10.6), nitroethane (SP = 11.1), acetonitrile (SP = 11.8), nitromethane (SP = 12.7), diethyl ether (SP = 7.4), diisobutyl ketone (SP = 7.8), butyl acetate (SP = 8.5), methyl propionate (SP = 8.9), dimethyl phthalate (SP = 10.7), carbonic acid-2,3-butylene (SP = 12.1), propylene carbonate (SP = 13.3), ethylene carbonate (SP = 14.7), 2-ethylhexanol (SP = 9.5), 4-methyl-2-pentanol (SP = 10.0), 2-ethyl-1-butanol (SP = 10.5), 1-pentanol (SP = 10.9), 1-butanol (SP = 11.4), 1-propanol (SP = 11.9), ethanol (SP = 12.7) and methanol (SP = 14.5).

A mixing ratio of the insulating binder resin to the conductive composition is decided by conductivity required to the product and a resistance value peculiar to the conductive composition and cannot be necessarily mentioned, however, they are preferably mixed in any mixing ratio as far as inherent physical properties of the insulating binder are not adversely affected.

When the conductive resin is molded after dissolving in a solution, the solvent capable of dissolving these insulating binder resins is not specifically limited and there can be used any alcohol-based solvents, ketone-based solvents, ester-based solvents, hydrocarbon-based solvents and aromatic solvents which dissolve the above insulating binder resins.

### [Molding Method]

A molded article may be obtained by dissolving a conductive resin in a solvent, conducting molding by optional method such as a solution molding, application, coating or printing method, and removing the solvent while drying. Also, a molded article may be obtained by melt-extruding a pelletized conductive resin, followed by melt-molding such as injection molding. Also, a molded article may be obtained by melt-extruding a pelletized conductive resin, followed by melt-molding such as injection molding.

### (Best Mode of second Aspect)

The present aspect is directed to a conductive composition which can be employed for antistatic agents, electromagnetic wave shielding materials, and cathode materials of functional capacitors, and a method for preparing the same as well as a conductive coating material. Also the present invention is directed to a capacitor and a method for preparing the same.

First, the conductive composition of the present aspect will be described.

The conductive composition of the present aspect comprises a conductive mixture of a cyano group-containing polymer compound and a π-conjugated conductive polymer, and a conductive filler.

### [π-Conjugated Conductive Polymer]

Examples of the π-conjugated conductive polymer include substituted or unsbstituted polyaniline, substituted or unsbstituted polypyrrole, substituted or unsbstituted polythiophene, and (co)polymers of one or more kinds selected from them. Particularly, polypyrrole, polythiophene, poly N-methylpyrrole, poly 3-methylthiophene, poly 3-methoxythiophene, and (co)polymers of two or more kinds selected from them are preferably used in view of resistance value, cost and reactivity.

Particularly, alkyl-substituted compounds such as poly N-methylpyrrole and poly 3-methylthiophene are more preferable because the effect of improving solvent solubility is exerted. Among alkyl groups, a methyl group is preferable because conductivity is not adversely affected. The (co)polymer indicates that the polymer may be a copolymer.

### [Cyano Group-Containing Polymer Compound]

Examples of the cyano group-containing polymer compound included in the conductive mixture refers to a polymer compound having a cyano group in the molecule. Examples thereof include polyacrylonitrile resin, polymethacrylonitrile resin, acrylonitrile-styrene resin, acrylonitrile-butadiene resin, acrylonitrile-butadiene styrene resin, and resin in which a hydroxyl or amino group-containing resin is cyanoethylated, for example, cyanoethylcellulose.

Such a cyano group-containing polymer compound has a function of dissolving a π-conjugated conductive polymer in water or an organic solvent (hereinafter water and an organic solvent may be referred to as a solvent).

The cyano group-containing polymer compound may be a copolymer, for example, a copolymer obtained by copolymerizing the cyano group-containing polymer compound having a cyano group with one or more polymers having a sulfo group having a dopant action. Examples of the polymer having a sulfo group include polyvinylsulfonic acid resin, polystyrenesulfonic acid resin, polyallylsulfonic acid resin, polyacrylsulfonic acid resin, polymethacrylsulfonic acid resin, poly-2-acrylamide-2-methylpropanesulfonic acid resin and polyisoprenesulfonic acid resin.

The cyano group-containing polymer compound may be copolymerized with the other vinyl compound.

Examples of the other vinyl compound include polymerizable vinyl compounds such as styrene, butadiene, acrylic acid, methacrylic acid, hydroxyacrylic acid, hydroxymethacrylic acid, acrylic acid ester, methacrylic acid ester and p-vinyltoluene. When these polymerizable vinyl compounds are copolymerized, solvent solubility can be controlled.

The cyano group-containing polymer compound may contain synthetic rubber components for improving impact resistance, and age resistors, antioxidants and ultraviolet absorbers for improving environment-resistant characteristics.

Since an amine compound as the antioxidant may inhibit the function of the oxidizing agent used to polymerize the π-conjugated conductive polymer, it is preferred to use a phenolic antioxidant instead of an amine-based antioxidant, to mix an amine-type antioxidant after the polymerization and the like.

### [Conductive Filler]

Examples of the conductive filler include graphite particles and carbon particles having a particle size of 5 to 5000 nm; metal particles of copper, nickel, silver, gold, tin, iron and the like; and carbon nano-tube and carbon fiber having a fiber length of 0.1 to 500 µm and a wire diameter of 1 to 1000 nm. Among these conductive fillers, preferred are carbon fiber and carbon nano-tube since they are excellent in dispersibility and small amount of carbon fiber and carbon nano-tube can improve conductivity.

The carbon materials such as carbon particles, graphite particles, carbon fiber and carbon nano-tube are preferable because they have a reduction action and prevent-deterioration of the π-conjugated conductive polymer due to oxygen.

The conductive filler preferably has a sulfo group and/or a carboxyl group on the surface. When the conductive filler has a sulfo group and/or a carboxyl group on the surface, dispersibility in the π-conjugated conductive polymer is improved and these groups can serve as a dopant to the π-conjugated conductive polymer, and thus heat resistance of the dopant can be enhanced. As the method of introducing a sulfo group and/or a carboxyl group onto the surface of the conductive filler, for example, well-known surface treatments such as treatments of the conductive filler with concentrated sulfuric acid, peroxide or the like can be employed.

The surface of the conductive filler is preferably coated with a π-conjugated conductive polymer. When the surface of the conductive filler is coated with the π-conjugated conductive polymer, short circuit caused by direct contact of the conductive filler with a dielectric layer can be prevented when a solid electrolyte film made of a conductive composition is formed on the dielectric layer. Furthermore, a function of repairing the dielectric layer due to the π-conjugated conductive polymer can be secured.

The surface of the conductive filler can be coated with the π-conjugated conductive polymer in a simple manner using a so-called chemical polymerization method. In the coating using the chemical polymerization, first, a precursor monomer of a π-conjugated conductive polymer and, if necessary, a dopant are added in a solvent containing a conductive filler dispersed therein, followed by well mixing under stirring to prepare a solution mixture. Then, an oxidizing agent is added to the solution mixture, thereby enabling the polymerization to proceed, followed by removal of the oxidizing agent, a residual monomer and by-product and further purification to obtain a conductive filler whose surface is coated with a π-conjugated conductive polymer.

Also the surface of a conductive filler may be coated with the π-conjugated conductive polymer by treating a conductive filler with a solution prepared by dissolving a conductive mixture of a cyano group-containing polymer compound and a π-conjugated conductive polymer in a solvent. In this case, the cyano group-containing polymer compound used in the treatment preferably has polarity different from that of a cyano group-containing polymer compound which is separately added so as to obtain a conductive composition. Consequently, it is possible to prevent dissolution during the dispersion treatment.

Even if the surface of the conductive filler is coated with a π-conjugated conductive polymer, when a conductive filler having a sulfo group and a carboxyl group is used, the sulfo group and the carboxyl group serve as a strong dopant and a π-conjugated conductive polymer film having high conductivity can be formed.

### [Dopant]

The conductive composition preferably contains a dopant so as to improve both conductivity and heat resistance. As the dopant, halogen compounds, Lewis acids, proton acids and the like are usually used. Specific examples of the dopant include organic acids such as organic carboxylic acid and organic sulfonic acid, organic cyano compound, fullerene, hydrogenated fullerene, fullerene hydroxide, carboxylated fullerene and sulfonated fullerene.

Examples of the organic acid include alkylbenzenesulfonic acid, alkylnaphthalenesulfonic acid, alkylnaphthalenedisulfonic acid, naphthalenesulfonic acid formalin polycondensate, melaminesulfonic acid formalin polycondensate, naphthalenedisulfonic acid, naphthalenetrisulfonic acid, dinaphthylmethanedisulfonic acid, anthraquinonesulfonic acid, anthraquinonedisulfonic acid, anthracenesulfonic acid and pyrenesulfonic acid, and metal salts thereof can also be used.

Examples of the organic cyano compound include dichlorodicyanobenzoquione (DDQ), tetracyanoquinodimethane and tetracyanoazanaphthalene.

In the conductive composition, a mass ratio of the cyano group-containing polymer compound to the π-conjugated conductive polymer (cyano group-containing polymer compound:π-conjugated conductive polymer) is preferably from 5:95 to 99:1, more preferably from 10:90 to 95:5, and particularly preferably from 20:80 to 85:15. When the mass ratio is within the above range, both conductivity and solvent solubility are high. On the other hand, when the ratio of the π-conjugated conductive polymer is less than the above range, it may become impossible to obtain sufficient conductivity. When the ratio is more than the above range, solvent solubility may become inferior.

A mass ratio of the conductive mixture to the conductive filler (conductive mixture:conductive filler) is preferably from 50:50 to 99.9:0.1, more preferably from 60:40 to 95:5, and particularly preferably from 70:30 to 90: 10. When the mass ratio is within the above range, both conductivity and film forming properties are high. On the other hand, when the ratio of the conductive filler is less than the above range, it may become impossible to sufficiently improve conductivity. On the other hand, when the ratio is more than the above range, film forming properties may become inferior and the cost may increase when using an expensive carbon nano-tube. When the conductive composition is used as the cathode material of the capacitor, excess conductive filler may cause short circuit due to leakage current of the capacitor derivative, and thus the resulting capacitor may do not function as the capacitor.

The conductive composition described above contains a cyano group-containing polymer compound and the cyano group-containing polymer compound has a property which enables the π-conjugated conductive polymer to be soluble in a solvent. Therefore, it becomes possible to form a solid electrolyte layer by applying the π-conjugated conductive polymer. Since the conductive composition contains a conductive filler, not only conductivity of the solid electrolyte layer formed of the conductive composition enhances, but also heat resistance of the solid electrolyte layer is enhanced because the conductive filler is made of inorganic particles.

### [Method for Preparing Conductive Composition]

The method for preparing the conductive composition of the present aspect is a method comprising polymerizing a precursor monomer of a π-conjugated conductive polymer in the presence of a cyano group-containing polymer compound to prepare a conductive mixture and mixing the conductive mixture with a conductive filler.

An example of the method will now be described. First, a cyano group-containing polymer compound is dissolved in a solvent which can dissolve the cyano group-containing polymer compound, and a precursor monomer of a π-conjugated conductive polymer is added to the solution, followed by well mixing under stirring to prepare a monomer-containing solution. Then, an oxidizing agent is added to the monomer-containing solution, thereby enabling the polymerization to proceed, followed by removal of the oxidizing agent, a residual monomer and by-product and further purification to obtain a conductive mixture of the cyano group-containing polymer compound and the π-conjugated conductive polymer. Then, a conductive filler is added to the conductive mixture and well dispersed while mixing under stirring to obtain a conductive composition.

As the oxidizing agent used to polymerize the precursor monomer of the π-conjugated conductive polymer, known oxidizing agents can be used. Examples of the oxidizing agent include metal halides such as ferric chloride, boron trifluoride and aluminum chloride; peroxides such as hydrogen peroxide and benzoyl peroxide; persulfates such as potassium persulfate, sodium persulfate and ammonium persulfate; ozone and oxygen.

The solvent used to dissolve the cyano group-containing polymer compound is not specifically limited. For example, the cyano group-containing polymer compound may be dissolved in water, methanol, ethanol, propylene carbonate, N-methyl pyrrolidone, dimethylformamide, dimethylacetamide, cyclohexanone, acetone, methyl ethyl ketone, methyl isobutyl ketone, toluene, or a solvent mixture thereof. Among these solvents, an organic solvent other than water exhibits small surface tension and high permeability into the porous material and therefore conductivity further enhances.

In the above method, the dopant may be added together with the precursor monomer of the π-conjugated conductive polymer, or may be added to the conductive mixture.

Mixing of the conductive filler with the conductive mixture is not limited to the addition directly to the conductive mixture and, for example, the conductive filler may be mixed with the conductive mixture such that the filler is added to a monomer-containing solution and coexist during the polymerization reaction of a conductive polymer.

In the above-described method for preparing the conductive composition, since the cyano group-containing polymer compound coexists in case of polymerizing the precursor monomer of the π-conjugated conductive polymer, the π-conjugated conductive polymer can be dissolved in a solvent. Therefore, it becomes possible to apply the π-conjugated conductive polymer and a solid electrolyte layer can be formed on the surface of a dielectric layer by simple processes such as application and drying processes. Furthermore, leakage current from the dielectric defective portion by the solid electrolyte layer can be prevented and also conductivity and heat resistance of the solid electrolyte layer can be improved because of mixing a conductive filler having high heat resistance.

### [Conductive Coating Material]

The conductive coating material of the present aspect contains the above conductive composition, and water or an organic solvent. Examples of the organic solvent include those other than water among solvents which dissolve the cyano group-containing polymer compound.

The conductive coating material may be prepared by adding the conductive composition to water or an organic solvent. The conductive coating material may be the conductive composition containing a solvent obtained by the method for preparing the conductive composition.

### [Capacitor]

The capacitor of the present aspect comprises an anode made of a porous material of a valve metal, a dielectric layer made of an oxide film of the valve metal, which is adjacent to the anode, and a cathode made of the aforementioned conductive composition The cathode of the capacitor is formed of the conductive composition and is therefore excellent in performances and also endure severe operating environment.

Examples of the valve metal include aluminum, tantalum, niobium, titanium, hafnium, zirconium, zinc, tungsten, bismuth and antimony. Among these valve metals, aluminum, tantalum and niobium are suited for use as an anode of a capacitor.

An example of a method of producing the capacitor of the present aspect will be described below. In an example of the method for producing this capacitor, first, a dielectric layer made of an oxide film of the valve metal is formed on an anode made of a porous material of the valve metal to obtain a capacitor intermediate. Examples of the method for preparing a capacitor intermediate include a method comprising etching an aluminum foil, thereby to increase the surface area, and oxidizing the surface, and a method comprising oxidizing the surface of a sintered body made of tantalum or niobium particles and forming the sintered body into a pellet.

Then, a conductive coating material is applied onto the capacitor intermediate by a dipping or spray coating method and drying to remove a solvent and to form a cathode obtained from a conductive composition on the surface of a dielectric layer, thus obtaining a capacitor.

In case of applying the conductive coating material by the dipping method, the capacitor intermediate is dipped in a conductive coating material, thereby to penetrate into a porous material and, if necessary, penetration into the porous material may be assisted by applying operations such as appling supersonic wave, vibration, evacuation and heating upon dipping. The thickness of coating may be adjusted by repeatedly dipping and drying.

In the method for producing the capacitor of the present aspect, since the conductive coating material is applied onto the dielectric layer and drying to form a cathode, the process for the production of the capacitor is simplified.

### EXAMPLES

### (Examples of First Aspect)

The present aspect will now be described in detail by way of examples.

### (Experimetion 1)

### (Test Method)

### (1) Solvent solubility

Solubility in each of NMP (N-methyl pyrrolidone), acetone, MEK (methyl ethyl ketone), toluene and water was examined. Samples were considered to be dissolved when particles are not remained after dissolving in a solvent and a coating film can be formed. The amount dissolved in each solvent was evaluated according to the following criteria.
A: dissolved in an amount of more than 3%
B: dissolved in an amount of 1 to 3%
C: dissolved in an amount of less than 1% or not dissolved

### (2) Surface resistance

Surface resistance of a coating film having a thickness of 2 µm was measured by using a resistivity meter (manufactured by Mitsubishi Chemical Corporation under the trade name of LORESTA GP).

### (3) Ion concentration

After dipping the resulting conductive composition in pure water at room temperature for 24 hours, ion concentrations of sulfuric acid, nitric acid and chlorine ions extracted in pure water were measured by using an ion chromatograph (ion chromatograph manufactured by Dionex Corporation under the trade name of ION CHROMATOGRAPH DX-120) and the total of the resulting ion concentrations of these ions were taken as the ion concentration.

### (Example 1)

### 1) Synthesis of cyano group-containing polymer compound

50 g of acrylonitrile and 5 g of butadiene were dissolved in 500 ml of toluene and 2.5 g of azobisisobutyronitrile as a polymerization initiator was added, and then the mixture was polymerized at 60°C for 8 hours.

The polymer produced by polymerization was washed with methanol.

### 2) Preparation of conductive composition

10 g of the cyano group-containing polymer compound obtained in the step 1) was dissolved in 90 g of acetonitrile and 50 g of pyrrole was added, followed by stirring for one hour while cooling to -20°C.

To this solution, an oxidizing agent solution prepared by dissolving 250 g of ferric chloride in 1250 ml of acetonitrile was added dropwise over 2 hours while maintaining at -20°C. Furthermore, the pyrrole was polymerized while continuously stirring for 12 hours. After the completion of the reaction, the resulting solution showed a blackish blue color.

After the completion of the reaction, a precipitate produced by adding 2000 ml of methanol to the uniform solution obtained was filtered and washed with methanol and pure water until the filtrate becomes clear to obtain a conductive composition. Solvent solubility, surface resistance and ion concentration of the resulting conductive composition were examined according to the above test methods. The results are shown in Table 1.

### (Example 2)

### 1) Synthesis of cyano group-containing polymer compound

30 g of acrylonitrile and 20 g of lauryl acrylate were dissolved in 500 ml of toluene and 2.5 g of azobisisobutyronitrile as a polymerization initiator was added, and then the mixture was polymerized at 60°C for 8 hours.

The polymer produced by polymerization was washed with methanol.

### 2) Preparation of conductive composition

10 g of the cyano group-containing polymer compound obtained in the step 1) was dissolved in 90 g of acetonitrile and 50 g of pyrrole was added, followed by stirring for one hour while cooling to -20°C.

To this solution, an oxidizing agent solution prepared by dissolving 250 g of ferric chloride in 1250 ml of acetonitrile was added dropwise over 2 hours while maintaining at -20°C. Furthermore, the pyrrole was polymerized while continuously stirring for 12 hours. After the completion of the reaction, the resulting solution showed a blackish blue color.

After the completion of the reaction, a precipitate produced by adding 2000 ml of methanol was filtered and washed with methanol and pure water until the filtrate becomes clear to obtain a conductive composition. In the same manner as in Example 1, a test was conducted. The results are shown in Table 1.

### (Example 3)

### 1) Synthesis of cyano group-containing polymer compound

30 g of acrylonitrile and 20 g of methyl acrylate were dissolved in 500 ml of toluene and 2.5 g of azobisisobutyronitrile as a polymerization initiator was added, and then the mixture was polymerized at 60°C for 8 hours. The polymer produced by polymerization was washed with methanol.

### 2) Preparation of conductive composition

10 g of the cyano group-containing polymer compound obtained in the step 1) was dissolved in 90 g of acetonitrile and 50 g of 3-methylthiphene was added, followed by stirring for one hour while cooling to -20°C.

To this solution, an oxidizing agent solution prepared by dissolving 250 g of ferric chloride in 1250 ml of acetonitrile was added dropwise over 2 hours while maintaining at -20°C. Furthermore, 3-methylthiphene was polymerized while continuously stirring for 12 hours. After the completion of the reaction, the resulting solution showed a blackish blue color.

After the completion of the reaction, a precipitate produced by adding 2000 ml of methanol was filtered and washed with methanol and pure water until the filtrate becomes clear to obtain a conductive composition. In the same manner as in Example 1, a test was conducted. The results are shown in Table 1.

### (Example 4)

### 1) Synthesis of cyano group-containing polymer compound

30 g of methacrylonitrile and 20 g of 2-ethylhexyl acrylate were dissolved in 500 ml of toluene and 2.5 g of azobisisobutyronitrile as a polymerization initiator was added, and then the mixture was polymerized at 60°C for 8 hours. The polymer produced by polymerization was washed with methanol.

### 2) Preparation of conductive composition

10 g of the polymer resin compound obtained in the step 1) was dissolved in 90 g of acetonitrile and 50 g of 3-methylthiphene was added, followed by stirring for one hour while cooling to -20°C.

To this solution, an oxidizing agent solution prepared by dissolving 250 g of ferric chloride in 1250 ml of acetonitrile was added dropwise over 2 hours while maintaining at -20°C. Furthermore, 3-methylthiphene was polymerized while continuously stirring for 12 hours. After the completion of the reaction, the resulting solution showed a blackish blue color.

After the completion of the reaction, a precipitate produced by adding 2000 ml of methanol was filtered and washed with methanol and pure water until the filtrate becomes clear to obtain a conductive composition. The resulting conductive composition had a SP value of 8.8.

### 3) Polymerization of insulating resin (acrylic resin)

20 g of methyl methacrylate, 20 g of 2-ethylhexylacrylate and 10 g of acrylic acid were dissolved in 500 ml of toluene and 2.5 g of azobisisobutyronitrile as a polymerization initiator was added, and then the mixture was polymerized at 60°C for 8 hours. The polymer produced by polymerization was washed with methanol. The resulting polymer had a SP value of 8.1.

### 4) Preparation of conductive resin

30 g of the resulting insulating resin was dissolved in 120 g of acetone and mixed with 1 g of the conductive composition obtained in the step 2). After stirring at normal temperature for 2 hours, the mixture was dried in the form of a coating film to obtain a conductive resin. In the same manner as in Example 1, a test was conducted. The results are shown in Table 1.

The resulting conductive resin was a resin, which can be subjected to melt-extrusion molding and injection molding, similar to a conventional acrylic resin.

### (Comparative Example 1)

10 g of dodecylbenzenesulfonic acid was added in 100 g of pure water and 10 g of pyrrole was added, followed by stirring for one hour while cooling to -20°C.

To this solution, an oxidizing agent solution prepared by dissolving 250 g of ferric chloride in 1250 ml of pure water was added dropwise over 2 hours while maintaining at -20°C. Furthermore, pyrrole was polymerized while continuously stirring for 12 hours. After the completion of the reaction, the resulting solution was a dispersion which showed a black color and caused precipitation of microparticles when allowed to stand for a while.

After the completion of the reaction, the resulting precipitate was filtered and washed with methanol and pure water until the filtrate becomes clear to obtain a conductive composition. In the same manner as in Example 1, a test was conducted. The results are shown in Table 1.

### (Comparative Example 2)

10 g of sodium polystyrenesulfonate was dissolved in 100 g of pure water and 10 g of pyrrole was added, followed by stirring for one hour while cooling to -20°C.

To this solution, an oxidizing agent solution prepared by dissolving 250 g of ferric chloride in 1250 ml of pure water was added dropwise over 2 hours while maintaining at -20°C. Furthermore, pyrrole was polymerized while continuously stirring for 12 hours. After the completion of the reaction, the resulting solution was a solution which showed a blue color and is uniformly dissolved.

After the completion of the reaction, the resulting solution was washed by passing through a column filled with an ion-exchange resin several times to obtain a conductive composition. In the same manner as in Example 1, a test was conducted. The results are shown in Table 1.

**Table 1**

| | Solvent solubility | | | | | Surface resistance Ω/□ | Ion concentration ppm |
|---|---|---|---|---|---|---|---|
| | NM P | Acetone | ME K | Toluene | Water | | |
| Example 1 | A | B | C | C | C | 2 × 10³ | 800 |
| Example 2 | A | A | A | B | C | 9 × 10³ | 600 |
| Example 3 | A | A | A | B | C | 7 × 10³ | 600 |
| Example 4 | A | A | A | A | C | 8 × 10³ | 900 |
| Comparative Example 1 | B | C | C | C | C | 2 × 10³ | 6700 |
| Comparative Example 2 | C | C | C | C | A | 1 × 10³ | 7200 |

As is apparent from the results shown in Table 1, the conductive compositions of Comparative Examples 1 and 2 do not exhibit good solubility in organic solvents such as NMP, acetone, MEK and toluene, whereas, the conductive resin compositions of Examples 1 to 4 are dissolved in any of these organic solvents and are soluble in organic solvents having a SP value within a wide range. As described above, the conductive resin compositions of the present invention are useful because they are uniformly dissolved in various solvents and can be uniformly applied as a conductive coating material. The conductive compositions of Examples 1 to 3 can be subjected to solution molding and the conductive resin of Example 4 can be subjected to extrusion molding and injection molding.

The conductive resins of Comparative Examples 1 and 2 have high ion concentration and exhibit ionic conductivity and therefore conductivity drastically varies with humidity of the operating environment, whereas, the conductive resins of Examples 1 to 4 show low ion concentration and exhibit no ionic conductivity and therefore exhibit stable conductivity which does not vary with humidity.

### (Experimetion 2)

### (Test Method)

### (1) Solvent solubility before curing

Solubility in each of NMP (N-methyl pyrrolidone), acetone, MEK (methyl ethyl ketone) and toluene was examined. Samples were considered to be dissolved when a coating film can be formed and particles are not remained after dissolving in a solvent. The amount dissolved in each solvent was evaluated according to the following criteria.
A: dissolved in an amount of more than 3%
B: dissolved in an amount of 1 to 3%
C: dissolved in an amount of less than 1% or not dissolved

### (2) Electrical conductivity

Electrical conductivity (unit: S/cm) of a coating film having a thickness of 2 µm was measured by using a resistivity meter (manufactured by Mitsubishi Chemical Corporation under the trade name of LORESTA MCP-T600).

### (3) Solvent resistance of coating film after curing

Each of NMP, toluene and water was dropped on a coating film after curing and, after standing for one hour, the solvent was wiped off. The state of the coating film was visually observed and evaluated according to the following criteria.
A: no change in coating film is observed
B: coating film is swollen
C: coating film is peeled off (eliminated)

### (Example 5)

### 1) Synthesis of cyano group-containing polymer compound

50 g of acrylonitrile and 5 g of butadiene were dissolved in 500 ml of toluene and 2.5 g of azobisisobutyronitrile as a polymerization initiator was added, and then the mixture was polymerized at 60°C for 8 hours.

The polymer produced by polymerization was washed with methanol.

### 2) Preparation of conductive composition

10 g of the cyano group-containing polymer compound obtained in the step 1) was dissolved in 90 g of acetonitrile and 50 g of a precursor monomer of a π-conjugated conductive polymer of pyrrole was added, followed by stirring for one hour while cooling to -20°C.

To this solution, an oxidizing agent solution prepared by dissolving 250 g of ferric chloride in 1250 ml of acetonitrile was added dropwise over 2 hours while maintaining at -20°C. Furthermore, pyrrole was polymerized while continuously stirring for 12 hours. After the completion of the reaction, the resulting solution showed a blackish blue color.

After the completion of the reaction, a precipitate produced by adding 2000 ml of methanol to the uniform solution was filtered and washed with methanol and pure water until the filtrate becomes clear to obtain a mixture of a cyano group-containing polymer compound and a π-conjugated conductive polymer. Solvent solubility of the resulting mixture was tested according to the above test method. The results are shown in Table 2.

Subsequently, a 3% NMP solution of this mixture was mixed with a curing agent including 10% of dimethylol cresol based on the solid content to prepare a solution of a conductive composition of the present aspect, and the resulting solution was applied onto a glass plate so that a dry coating film has a thickness of 2 µm and then dried at 120°C for 2 hours to form a film. Electrical conductivity of the coating film thus formed was measured immediately after formation (initial) and after standing at 125°C for 240 hours according to the above test method. Also the solvent resistance was measured according to the above test method. The results are shown in Table 2.

### (Example 6)

### 1) Synthesis of cyano group-containing polymer compound

30 g of acrylonitrile and 20 g of hydroxyethyl acrylate were dissolved in 500 ml of toluene and 2.5 g of azobisisobutyronitrile as a polymerization initiator was added, and then the mixture was polymerized at 60°C for 8 hours.

The polymer produced by polymerization was washed with methanol.

### 2) Preparation of conductive composition

10 g of the cyano group-containing polymer compound obtained in the step 1) was dissolved in 90 g of acetonitrile and 50 g of pyrrole was added, followed by stirring for one hour while cooling to -20°C.

To this solution, an oxidizing agent solution prepared by dissolving 250 g of ferric chloride in 1250 ml of acetonitrile was added dropwise over 2 hours while maintaining at -20°C. Furthermore, pyrrole was polymerized while continuously stirring for 12 hours. After the completion of the reaction, the resulting solution showed a blackish blue color.

After the completion of the reaction, a precipitate produced by adding 2000 ml of methanol was filtered and washed with methanol and pure water until the filtrate becomes clear to obtain a mixture. Solvent solubility of the resulting mixture was tested in the same manner as in Example 1. The results are shown in Table 2.

Subsequently, a 3% NMP solution of this mixture was mixed with a curing agent comprising 5% of dimethylol cresol based on the solid content to prepare a solution of a conductive composition of the present aspect, and the resulting solution was applied onto a glass plate so that a dry coating film has a thickness of 2 µm and then dried at 120°C for 2 hours to form a film. In the same manner as in Example 5, electrical conductivity and solvent resistance of the coating film thus formed were measured. The results are shown in Table 2.

### (Example 7)

### 1) Synthesis of cyano group-containing polymer compound

30 g of acrylonitrile and 20 g of methacrylic acid were dissolved in 500 ml of toluene and 2.5 g of azobisisobutyronitrile as a polymerization initiator was added, and then the mixture was polymerized at 60°C for 8 hours. The polymer produced by polymerization was washed with methanol.

### 2) Preparation of conductive composition

10 g of the cyano group-containing polymer compound obtained in the step 1) was dissolved in 90 g of acetonitrile and 50 g of a precursor monomer of a π-conjugated conductive polymer of 3-methylthiophene was added, followed by stirring for one hour while cooling to -20°C.

To this solution, an oxidizing agent solution prepared by dissolving 250 g of ferric chloride in 1250 ml of acetonitrile was added dropwise over 2 hours while maintaining at -20°C. Furthermore, 3-methylthiophene was polymerized while continuously stirring for 12 hours. After the completion of the reaction, the resulting solution showed a blackish blue color.

After the completion of the reaction, a precipitate produced by adding 2000 ml of methanol was filtered and washed with methanol and pure water until the filtrate becomes clear to obtain a mixture. A solvent solubility test was conducted in the same manner as in Example 5. The results are shown in Table 2.

Subsequently, a 3% NMP solution of this mixture was mixed with a curing agent comprising 5% of a bisphenol A type epoxy resin ["EPIKOTE 828", manufactured by Japan Epoxy Resins Co., Ltd.] based on the solid content to prepare a solution of a conductive composition of the present aspect, and a coating film was formed in the same manner as in Example 1, using the resulting solution. Electrical conductivity and solvent resistance were measured. The results are shown in Table 2.

### (Example 8)

### 1) Synthesis of cyano group-containing polymer compound

30 g of methacrylonitrile and 20 g of allylsulfonic acid were dissolved in 500 ml of toluene and 2.5 g of azobisisobutyronitrile as a polymerization initiator was added, and then the mixture was polymerized at 60°C for 8 hours. The polymer produced by polymerization was washed with methanol.

### 2) Preparation of conductive composition

10 g of the cyano group-containing polymer compound obtained in the step 1) was dissolved in 90 g of acetonitrile and 50 g of 3-methylthiophene was added, followed by stirring for one hour while cooling to -20°C.

To this solution, an oxidizing agent solution prepared by dissolving 250 g of ferric chloride in 1250 ml of acetonitrile was added dropwise over 2 hours while maintaining at -20°C. Furthermore, 3-methylthiophene was polymerized while continuously stirring for 12 hours.

After the completion of the reaction, a precipitate produced by adding 5000 ml of methanol was filtered and washed with methanol and pure water until the filtrate becomes clear to obtain a mixture of a cyano group-containing polymer compound and a π-conjugated conductive polymer. The resulting mixture had a SP value of 12.1. A solvent solubility test was conducted in the same manner as in Example 5. The results are shown in Table 2. A curing agent of 10% dimethylcresol was added to obtain a conductive composition of the present aspect.

### 3) Polymerization of insulating resin (acrylic resin)

20 g of methyl methacrylate, 20 g of allylsulfonic acid and 10 g of acrylic acid were dissolved in 500 ml of toluene and 2.5 g of azobisisobutyronitrile as a polymerization initiator was added, and the mixture was polymerized at 60°C for 8 hours. The polymer produced by polymerization was washed with methanol. The resulting polymer has a SP value of 12.8.

### 4) Preparation of conductive resin

30 g of the resulting insulating resin was dissolved in 120 g of acetone and mixed with 1 g of the conductive composition obtained in the step 2), followed by stirring at normal temperature for 2 hours. Then, the mixture was mixed with 0.02 g of a silane coupling agent (manufactured by SHIN-ETSU CHEMICAL CO., LTD. under the trade name of KBM-403) and then dried at 120°C for 2 hours in the form of a coating film to obtain a conductive resin. Electrical conductivity and solvent resistance tests were conducted in the same manner as in Example 5. The results are shown in Table 2.

The resulting conductive resin was a resin, which can be subjected to melt-extrusion molding, injection molding, similar to a conventional acrylic resin.

### (Comparative Example 3)

10 g of dodecylbenzenesulfonic acid was dissolved in 100 g of pure water and 10 g of pyrrole was added, followed by stirring for one hour while cooling to -20°C.

To this solution, an oxidizing agent solution prepared by dissolving 250 g of ferric chloride in 1250 ml of pure water was added dropwise over 2 hours while maintaining at -20°C. Furthermore, pyrrole was polymerized while continuously stirring for 12 hours. After the completion of the reaction, the resulting solution was a dispersion which showed a black color and caused precipitation of microparticles when allowed to stand for a while.

After the completion of the reaction, the resulting precipitate was filtered and washed with methanol and pure water until the filtrate becomes clear to obtain a conductive composition. In the same manner as in Example 5, a test was conducted. The results are shown in Table 2.

### (Comparative Example 4)

10 g of sodium polystyrenesulfonate was dissolved in 100 g of pure water and 10 g of pyrrole was added, followed by stirring for one hour while cooling to -20°C.

To this solution, an oxidizing agent solution prepared by dissolving 250 g of ferric chloride in 1250 ml of pure water was added dropwise over 2 hours while maintaining at -20°C. Furthermore, pyrrole was polymerized while continuously stirring for 12 hours. After the completion of the reaction, the resulting solution was a solution which showed a blue color.

After the completion of the reaction, the resulting solution was washed by passing through a column filled with an ion-exchange resin several times to obtain a conductive composition. In the same manner as in Example 5, a test was conducted. The results are shown in Table 2.

**Table 2**

| | Solvent solubility | | | | Electrical conductivity | | Solvent resistance | | |
|---|---|---|---|---|---|---|---|---|---|
| | NMP | Acetone | MEK | Toluene | Initial (S/cm) | 125°C, 240 h (S/cm) | Water | NMP | Toluene |
| Example 5 | A | B | C | C | 2×10⁰ | 3×10⁰ | A | A | A |
| Example 6 | A | A | A | B | 9×10⁰ | 8×10⁰ | A | A | A |
| Example 7 | A | A | A | B | 7×10⁰ | 7×10⁰ | A | A | A |
| Example 8 | A | A | A | C | 8×10⁻² | 6×10⁻² | A | A | A |
| Comparative Example 3 | B | C | C | C | 2×10⁰ | 1×10² | C | C | C |
| Comparative Example 4 | C | C | C | C | 1×10⁰ | 5×10⁻¹ | C | B | A |

As is apparent from the results shown in Table 2, the mixture constituting a portion of the conductive compositions of Comparative Examples 3 and 4 does not exhibit good solubility in organic solvents such as NMP, acetone, MEK and toluene, whereas, the mixture constituting a portion of the conductive resin compositions of Examples 5 to 8 are dissolved in any of these organic solvents and are soluble in organic solvents having a SP value within a wide range. In Examples 5 to 8, when the mixture of the cyano group-containing polymer compound and the π-conjugated conductive polymer is excellent in solvent solubility, the conductive composition obtained by mixing with the curing agent is excellent in solvent solubility.

As described above, the conductive resin compositions of the present invention are useful because they are uniformly dissolved in various solvents and can be uniformly applied as a conductive coating material. The conductive compositions of Examples 5 to 7 can be subjected to solution molding and the conductive resin of Example 8 can be subjected to extrusion molding and injection molding.

Conductivity of the coating films or conductive resins of Comparative Examples 3 and 4 drastically varies with temperature of the operating environment, whereas, the coating films or conductive resins of Examples 5 to 8 exhibit excellent heat resistance because conductivity does not deteriorate even when exposed to high temperature conditions of 125°C. Furthermore, the coating films of Examples 5 to 8 exhibit excellent resistance to solvents such as water, NMP and toluene.

### (Examples of second Aspect)

The present aspect will now be described in detail by way of examples.

### (Example 9)

### (1) Synthesis of cyano group-containing polymer compound

50 g of acrylonitrile and 10 g of styrene were dissolved in 500 ml of toluene and 1.5 g of azobisisobutyronitrile as a polymerization initiator was added, and then the mixture was polymerized at 50°C for 5 hours. The polymer produced by polymerization was washed with methanol to obtain a cyano group-containing polymer compound.

### (2) Preparation of conductive composition

10 g of the cyano group-containing polymer compound obtained in the step (1) was dissolved in 90 g of acetonitrile and 50 g of pyrrole and 20 g of sodium octadecylnaphthalenesulfonate were added, followed by stirring for one hour while cooling to -20°C to prepare a monomer-containing solution.

To the monomer-containing solution, an oxidizing agent solution prepared by dissolving 250 g of ferric chloride in 1250 ml of acetonitrile was added dropwise over 2 hours while maintaining at -20°C. Furthermore, pyrrole was polymerized while continuously stirring for 12 hours.

After the completion of the polymerization, 2000 ml of methanol was added to the reaction solution to precipitate a product, and the resulting precipitate was filtered and then washed with methanol and pure water until the filtrate becomes clear to obtain a conductive mixture. The resulting conductive mixture was dissolved in dimethylacetamide (DMAc) to prepare a conductive mixture solution having a concentration of 5% by mass. Then, 10 parts by mass of a carbon nano-tube based on 100 parts by mass of the solid content of the conductive mixture was mixed to the conductive mixture, and stirred to obtain a conductive coating material containing a conductive composition and dimethylacetamide.

Electrical conductivity (conductivity) and heat resistance of the resulting conductive coating material were evaluated by the following test methods. The results are shown in Table 3.

### <Test Method>

### (a) Electrical conductivity

Electrical conductivity (unit: S/cm) of a coating film formed by applying a conductive coating material onto a PET film in a thickness of 2 µm was measured by a conductivity meter (trade name: LORESTA MCP-T600) (column of "Initial" in the table).

### (b) Heat resistance

A conductive coating material was applied onto a PET film in a thickness of 10 µm and then allowed to stand in an oven at 125°C for 240 hours. After standing for 240 hours, a change in electrical conductivity was taken as an indicator of heat resistance.

**Table 3**

| | Electrical conductivity (S/cm) | |
|---|---|---|
| | Initial | After 240 hours |
| Example 20 | 5 × 10¹ | 3 × 10¹ |
| Example 21 | 7 × 10¹ | 5 × 10¹ |
| Example 22 | 1 × 10² | 8 × 10¹ |
| Comparative Example 9 | 2 × 10⁻² | 1 × 10⁻⁴ |

### (Example 10)

### (1) Synthesis of cyano group-containing polymer compound

30 g of acrylonitrile and 20 g of methyl methacrylate were dissolved in 500 ml of toluene and 1.5 g of azobisisobutyronitrile as a polymerization initiator was added, and then the mixture was polymerized at 50°C for 5 hours. The polymer produced by polymerization was washed with methanol to obtain a cyano group-containing polymer compound.

### (2) Preparation of conductive composition

10 g of the cyano group-containing polymer compound obtained in the step (1) was dissolved in 90 g of acetonitrile and 50 g of pyrrole and 20 g of sodium anthraquinonedisulfonate were added, followed by stirring for one hour while cooling to -20°C to prepare a monomer-containing solution.

To the monomer-containing solution, an oxidizing agent solution prepared by dissolving 250 g of ferric chloride in 1250 ml of acetonitrile was added dropwise over 2 hours while maintaining at -20°C. Furthermore, pyrrole was polymerized while continuously stirring for 12 hours.

After the completion of the polymerization, 2000 ml of methanol was added to the reaction solution to precipitate a product, and the resulting precipitate was filtered and then washed with methanol and pure water until the filtrate becomes clear to obtain a conductive mixture. The resulting conductive mixture was dissolved in dimethylacetamide (DMAc) to prepare a conductive mixture solution having a concentration of 5% by mass. Then, the conductive mixture solution was mixed with 15 parts by mass of a sulfo group-containing carbon nano-tube, which is based on 100 parts by mass of the solid content of the conductive mixture, and stirred to obtain a conductive coating material containing a conductive composition and dimethylacetamide. The sulfo group-containing carbon nano-tube used was obtained by adding 100 g of a carbon nano-tube in 1000 ml of concentrated sulfuric acid and refluxing at 100°C for 12 hours, followed by washing and further filtration.

The resulting conductive coating material was tested in the same manner as in Example 9.

### (Example 11)

### (1) Preparation of surface-coated conductive filler

10 g of the sulfo group-containing carbon nano-tube used in Example 10 was dispersed in 100 ml of acetonitrile, and 5 g of pyrrole and 1 g of p-toluenesulfonic acid were added, followed by stirring for one hour while cooling to -20°C. Then, an oxidizing agent solution prepared by dissolving 15 g of ferric chloride in 100 ml of acetonitrile was added dropwise to the solution over 2 hours while maintaining at -20°C. Furthermore, while continuously stirring for 12 hours, pyrrole was polymerized. As a result of the polymerization, a surface-coated conductive filler in which the surface of the sulfo group-containing carbon nano-tube is coated with pyrrole was obtained.

The surface-coated conductive filler was collected by filtration and then washed with methanol and pure water until the filtrate becomes clear to obtain a high purity surface-coated conductive filler.

### (2) Synthesis of cyano group-containing polymer compound

30 g of acrylonitrile and 20 g of methyl methacrylate were dissolved in 500 ml of toluene and 1.5 g of azobisisobutyronitrile as a polymerization initiator was added, and then the mixture was polymerized at 50°C for 5 hours. The polymer produced by polymerization was washed with methanol to obtain a cyano group-containing polymer compound.

### (3) Preparation of conductive composition

10 g of the cyano group-containing polymer compound obtained in the step (2) was dissolved in 90 g of acetonitrile and 50 g of pyrrole and 20 g of sodium anthraquinonedisulfonate were added, followed by stirring for one hour while cooling to -20°C to prepare a monomer-containing solution.

To the monomer-containing solution, an oxidizing agent solution prepared by dissolving 250 g of ferric chloride in 1250 ml of acetonitrile was added dropwise over 2 hours while maintaining at -20°C. Furthermore, pyrrole was polymerized while continuously stirring for 12 hours.

After the completion of the polymerization, 2000 ml of methanol was added to the reaction solution to precipitate a product, and the resulting precipitate was filtered and then washed with methanol and pure water until the filtrate becomes clear to obtain a conductive mixture. The resulting conductive mixture was dissolved in dimethylacetamide (DMAc) to prepare a conductive mixture solution having a concentration of 5% by mass. Then, the conductive mixture solution was mixed with 15 parts by mass of the surface-coated carbon nano-tube, which was based on is 100 parts by mass of the solid content of the conductive mixture solution, obtained in the step (1), and stirred to obtain a conductive coating material containing a conductive composition and dimethylacetamide.

The resulting conductive coating material was tested in the same manner as in Example 9.

### (Comparative Example 5)

10 g of sodium polystyrenesulfonate having a molecular weight of 50000 was dissolved in 100 g of pure water and 10 g of aniline was added, followed by stirring for one hour while cooling to 5°C to prepare a monomer-containing solution.

To the monomer-containing solution, an oxidizing agent solution prepared by dissolving 250 g of ammonium persulfate in 1250 ml of pure water was added dropwise over 2 hours while maintaining at 5°C. Furthermore, aniline was polymerized while continuously stirring for 12 hours.

After the completion of the reaction, the resulting solution containing the polymerization product was washed by passing through a column filled with an ion-exchange resin several times to obtain a solution containing a conductive composition. Then, the concentration of the conductive composition of the solution was adjusted to 5% by mass to obtain a conductive coating material.

The resulting conductive coating material composition was tested in the same manner as in Example 9.

The conductive coating materials of Examples 9 to 11 contained a cyano group-containing polymer compound, a π-conjugated conductive polymer and a conductive filler and therefore had high conductivity and excellent heat resistance.

On the other hand, the conductive coating material of Comparative Example 5 was inferior in not only conductivity, but also heat resistance because the π-conjugated conductive polymer was dissolved in water using a polyelectrolyte.

### INDUSTRIAL APPLICABILITY

The first aspect of the present invention can provide a conductive polymer composition, a conductive coating material and a conductive resin, which are excellent in moldability and are soluble in an organic solvent having a SP value within a wide range.

The first aspect of the present invention further provides a conductive composition which is excellent in moldability and is soluble in an organic solvent and also has no ionic conductivity and is used for various purposes because, after forming into a coating film or a molded article using a conductive coating material or a conductive resin, the resulting coating film or molded article is not dissolved in water or a solvent and has high heat resistance. The conductive composition, the conductive coating material and the conductive resin of the present aspect can be preferably used for antistatic materials such as antistatic coatings and antistatic packaging materials; electromagnetic wave shielding materials for electromagnetic shielding of liquid crystal displays and plasma displays; electrophotographic equipment components such as transfer belt, developing roll, charging roll and transfer roll; and electronic components such as functional capacitors and field effect transistors (FET).

The second aspect of the present invention provides a conductive composition capable of forming a solid electrolyte layer having excellent conductivity and heat resistance by simple processes such as application and drying processes, and a method for producing the same, as well as a conductive coating material. The resulting solid electrolyte layer is excellent in conductivity and heat resistance. The capacitor of the present aspect is excellent in performances and can also endure severe operating environment. In the method for producing the capacitor of the present aspect, the production process of the capacitor can be simplified. The conductive composition of the present aspect can be preferably used for not only cathode materials of functional capacitors such as aluminum electrolytic, tantalum electrolytic and niobium electrolytic capacitors, but also antistatic materials such as antistatic coatings and antistatic packaging materials; electromagnetic wave shielding materials for electromagnetic shielding of liquid crystal displays and plasma displays; and electrophotographic equipment components such as transfer belt, developing roll, charging roll and transfer roll.

## Claims

1. A conductive composition comprising a π-conjugated conductive polymer and a cyano group-containing polymer compound, which is a copolymer of a cyano group-containing monomer and a vinyl group-containing monomer, wherein
a copolymerization molar ratio of the cyano group-containing monomer to the vinyl group-containing monomer in the cyano group-containing polymer compound is from 99:1 to 10:90, and
a mass ratio of the cyano group-containing polymer compound to the π-conjugated conductive polymer is from 5:95 to 99:1.

2. The conductive composition according to claim 1, further comprising a dopant.

3. The conductive composition according to claim 1, wherein the cyano group-containing monomer is at least one of acrylonitrile and methacrylonitrile.

4. The conductive composition according to claim 1, wherein the vinyl group-containing monomer is at least one selected from the group consisting of vinyl halide compounds, aromatic vinyl compounds, heterocyclic vinyl compounds, aliphatic vinyl compounds, acrylic compounds, diene compounds and maleimide compounds.

5. The conductive composition according to claim 1, wherein the π-conjugate conductive polymer comprises at least one selected from the group consisting of polypyrrole, polythiophene, poly N-methylpyrrole, poly 3-methylthiophene and poly 3-methoxythiophene.

6. A conductive coating material comprising the conductive composition according to claim 1 and an organic solvent, the conductive composition being dissolved in the organic solvent.

7. A conductive resin comprising the conductive composition according to claim 1 and an insulating resin, the conductive composition being mixed with the insulating resin.

8. The conductive resin according to claim 7, wherein a difference in SP value between the cyano group-containing polymer compound and the insulating resin is 0 or more and 2 or less.

9. The conductive composition according to claim 1, wherein the conductive composition further comprises a curing agent capable of reacting with a cyano group.

10. The conductive composition according to claim 9, wherein the cyano group-containing polymer compound is a copolymer of the cyano group-containing monomer and the vinyl group-containing monomer.

11. The conductive composition according to claim 1, wherein the vinyl group-containing monomer is a vinyl group-containing monomer having a functional group, and the conductive composition further comprises a curing agent capable of reacting at least one of a cyano group and the functional group.

12. The conductive composition according to 11, wherein the functional group is at least one selected from the group consisting of sulfo group, carboxyl group, hydroxyl group, epoxy group and amino group.

13. The conductive composition according to 10 or 11, wherein the cyano group-containing monomer is at least one of acrylonitrile and methacrylonitrile.

14. The conductive composition according to 9 or 11, further comprising a dopant.

15. The conductive composition according to 9 or 11, wherein the π-conjugated conductive polymer is at least one selected from the group consisting of polypyrrole, polythiophene, poly N-methylpyrrole, poly 3-methylthiophene and poly 3-methoxythiophene.

16. A conductive coating material comprising the conductive composition according to claim 9 or 11 and an organic solvent, the conductive composition being dissolved in the organic solvent.

17. A conductive resin comprising the conductive composition according to claim 9 or 11 and an insulating resin, the conductive composition being mixed with the insulating resin.

18. The conductive resin according to claim 17, wherein a difference in SP value between the cyano group-containing polymer compound and the insulating resin is 0 or more and 2 or less.

19. A conductive composition comprising a conductive filler, a conductive mixture of a cyano group-containing polymer compound, which is a copolymer of a cyano group-containing monomer and a vinyl group-containing monomer, and a π-conjugated conductive polymer.

20. The conductive composition according to claim 19, wherein the surface of the conductive filler is coated with the π-conjugated conductive polymer.

21. The conductive composition according to claim 19, further comprising a dopant.

22. The conductive composition according to claim 19, wherein the conductive filler has at least one of a sulfo group and a carboxyl group on the surface.

23. The conductive composition according to claim 19, wherein a mass ratio of the cyano group-containing polymer compound to the π-conjugated conductive polymer is from 5:95 to 99:1.

24. The conductive composition according to claim 19, wherein a mass ratio of the conductive mixture to the conductive filler is from 50:50 to 99.9:0.1.

25. A method for preparing a conductive composition, which comprises polymerizing a precursor monomer of a π-conjugated conductive polymer in the presence of a cyano group-containing polymer compound, which is a copolymer of a cyano group-containing monomer and a vinyl group-containing monomer, to give a conductive mixture, and mixing the conductive mixture with a conductive filler.

26. A conductive coating material comprising the conductive composition according to claim 19, and water or an organic solvent.

27. A capacitor comprising an anode made of a porous material of a valve metal; a dielectric layer made of an oxide film of the valve metal, which is adjacent to the anode; and a cathode made of the conductive composition according to claim 19.

28. A method for producing a capacitor, which comprises forming, on an anode made of a porous material of a valve metal, a dielectric layer made of an oxide film of the valve metal; applying the conductive coating material according to claim 26 onto the dielectric layer; and drying the conductive coating material to form a cathode made of a conductive composition on the surface of the dielectric layer.

29. The conductive composition according to Claim 1, wherein the π-conjugated conductive polymer is at least one selected from the group consisting of polyacetylenes, polyphenylenes, polyphenylenevinylenes, polyacenes, polythiophenevinylenes and copolymers thereof.

30. The conductive composition according to Claim 1, wherein the conjugated conductive polymer is at least one of the group consisting of of polypyrroles, polythiophenes and polyanilines.

31. The conductive composition according to Claim 1, wherein the cyano group-containing polymer compound is a copolymer of a cyano group-containing monomer and a vinyl group-containing monomer, which is at least one selected from the group consisting of vinyl halide compounds, aromatic vinyl compounds, heterocyclic vinyl compounds, aliphatic vinyl compounds, acrylic compounds, diene compounds and maleimide compounds.

32. The conductive composition according to 1, wherein the π-conjugated conductive polymer includes substituted or unsbstituted polythiophene.

## Patentansprüche

1. Leitfähige Zusammensetzung, welche ein π-konjugiertes leitfähiges Polymer und eine Polymerverbindung mit Cyanogruppe umfasst, bei welcher es sich um ein Copolymer aus einem Monomer mit Cyanogruppe und einem Monomer mit Vinylgruppe handelt, wobei bei der Copolymerisation das Molverhältnis des Monomers mit Cyanogruppe zu dem Monomer mit Vinylgruppe in der Polymerverbindung mit Cyanogruppe 99:1 bis 10:90 beträgt, und
das Massenverhältnis der Polymerverbindung mit Cyanogruppe zu dem π-konjugierten leitfähigen Polymer 5:95 bis 99:1 beträgt.

2. Leitfähige Zusammensetzung nach Anspruch 1, welche ferner einen Dotierstoff umfasst.

3. Leitfähige Zusammensetzung nach Anspruch 1, wobei es sich bei dem Monomer mit Cyanogruppe um mindestens eines aus Acrylnitril und Methacrylnitril handelt.

4. Leitfähige Zusammensetzung nach Anspruch 1, wobei es sich bei dem Monomer mit Vinylgruppe um mindestens eines handelt, das aus der Gruppe ausgewählt ist, die aus Vinylhalogenidverbindungen, aromatischen Vinylverbindungen, heterocyclischen Vinylverbindungen, aliphatischen Vinylverbindungen, Acrylverbindungen, Dienverbindungen und Maleimidverbindungen besteht.

5. Leitfähige Zusammensetzung nach Anspruch 1, wobei das π-konjugierte leitfähige Polymer mindestens eines umfasst, das aus der Gruppe ausgewählt ist, die aus Polypyrrol, Polythiophen, Poly-N-methylpyrrol, Poly-3-methylthiophen und Poly-3-methoxythiophen besteht.

6. Leitfähiges Beschichtungsmaterial, welches die leitfähige Zusammensetzung nach Anspruch 1 und ein organisches Lösungsmittel umfasst, wobei die leitfähige Zusammensetzung in dem organischen Lösungsmittel gelöst ist.

7. Leitfähiges Harz, welches die leitfähige Zusammensetzung nach Anspruch 1 und ein isolierendes Harz umfasst, wobei die leitfähige Zusammensetzung mit dem isolierenden Harz vermischt ist.

8. Leitfähiges Harz nach Anspruch 7, wobei ein Unterschied zwischen den Löslichkeitsparametern (SP-Werten) der Polymerverbindung mit Cyanogruppe und des isolierenden Harzes 0 oder mehr und 2 oder weniger beträgt.

9. Leitfähige Zusammensetzung nach Anspruch 1, wobei die leitfähige Zusammensetzung ferner ein Härtungsmittel umfasst, das mit einer Cyanogruppe reagieren kann.

10. Leitfähige Zusammensetzung nach Anspruch 9, wobei es sich bei der Polymerverbindung mit Cyanogruppe um ein Copolymer aus dem Monomer mit Cyanogruppe und dem Monomer mit Vinylgruppe handelt.

11. Leitfähige Zusammensetzung nach Anspruch 1, wobei es sich bei dem Monomer mit Vinylgruppe um ein Monomer mit Vinylgruppe handelt, welches eine funktionelle Gruppe aufweist, und die leitfähige Zusammensetzung ferner ein Härtungsmittel umfasst, welches mindestens eines aus einer Cyanogruppe und der funktionellen Gruppe zur Reaktion bringen kann.

12. Leitfähige Zusammensetzung nach Anspruch 11, wobei es sich bei der funktionellen Gruppe um mindestens eine handelt, die aus der Gruppe ausgewählt ist, die aus einer Sulfonsäuregruppe, einer Carboxylgruppe, einer Hydroxylgruppe, einer Epoxygruppe und einer Aminogruppe besteht.

13. Leitfähige Zusammensetzung nach Anspruch 10 oder 11, wobei es sich bei dem Monomer mit Cyanogruppe um mindestens eines aus Acrylnitril und Methacrylnitril handelt.

14. Leitfähige Zusammensetzung nach Anspruch 9 oder 11, welche ferner einen Dotierstoff umfasst.

15. Leitfähige Zusammensetzung nach Anspruch 9 oder 11, wobei es sich bei dem π-konjugierten leitfähigen Polymer um mindestens eines handelt, das aus der Gruppe ausgewählt ist, die aus Polypyrrol, Polythiophen, Poly-N-methylpyrrol, Poly-3-methylthiophen und Poly-3-methoxythiophen besteht.

16. Leitfähiges Beschichtungsmaterial, welches die leitfähige Zusammensetzung nach Anspruch 9 oder 11 und ein organisches Lösungsmittel umfasst, wobei die leitfähige Zusammensetzung in dem organischen Lösungsmittel gelöst ist.

17. Leitfähiges Harz, welches die leitfähige Zusammensetzung nach Anspruch 9 oder 11 und ein isolierendes Harz umfasst, wobei die leitfähige Zusammensetzung mit dem isolierenden Harz vermischt ist.

18. Leitfähiges Harz nach Anspruch 17, wobei der Unterschied zwischen den Löslichkeitsparametern (SP-Werten) der Polymerverbindung mit Cyanogruppe und des isolierenden Harzes 0 oder mehr und 2 oder weniger beträgt.

19. Leitfähige Zusammensetzung, welche einen leitfähigen Füllstoff und ein leitfähiges Gemisch aus einer Polymerverbindung mit Cyanogruppe, bei welcher es sich um ein Copolymer aus einem Monomer mit Cyanogruppe und einem Monomer mit Vinylgruppe handelt, und ein π-konjugiertes leitfähiges Polymer umfasst.

20. Leitfähige Zusammensetzung nach Anspruch 19, wobei die Oberfläche des leitfähigen Füllstoffs mit dem πkonjugierten leitfähigen Polymer beschichtet ist.

21. Leitfähige Zusammensetzung nach Anspruch 19, welche ferner einen Dotierstoff umfasst.

22. Leitfähige Zusammensetzung nach Anspruch 19, wobei der leitfähige Füllstoff an der Oberfläche mindestens eines aus einer Sulfonsäuregruppe und einer Carboxylgruppe aufweist.

23. Leitfähige Zusammensetzung nach Anspruch 19, wobei das Massenverhältnis der Polymerverbindung mit Cyanogruppe zu dem π-konjugierten leitfähigen Polymer 5:95 bis 99:1 beträgt.

24. Leitfähige Zusammensetzung nach Anspruch 19, wobei das Massenverhältnis des leitfähigen Gemisches zu dem leitfähigen Füllstoff 50:50 bis 99,9:0,1 beträgt.

25. Verfahren zur Herstellung einer leitfähigen Zusammensetzung, welches das Polymerisieren einer Monomervorstufe eines π-konjugierten leitfähigen Polymers in Gegenwart einer Polymerverbindung mit Cyanogruppe, bei welcher es sich um ein Copolymer aus einem Monomer mit Cyanogruppe und einem Monomer mit Vinylgruppe handelt, wodurch man ein leitfähiges Gemisch erhält, und das Vermischen des leitfähigen Gemisches mit einem leitfähigen Füllstoff umfasst.

26. Leitfähiges Beschichtungsmaterial, welches die leitfähige Zusammensetzung nach Anspruch 19 und Wasser oder ein organisches Lösungsmittel umfasst.

27. Kondensator, welcher eine Anode, die aus einem porösen Material aus einem Ventilmetall hergestellt ist; eine dielektrische Schicht, die aus einem Oxidfilm des Ventilmetalls hergestellt ist und sich in Nachbarschaft zu der Anode befindet; und eine Kathode umfasst, die aus der leitfähigen Zusammensetzung nach Anspruch 19 hergestellt ist.

28. Verfahren zur Herstellung eines Kondensators, welches das Bilden einer dielektrischen Schicht, die aus einem Oxidfilm eines Ventilmetalls hergestellt ist, auf einer Anode, die aus einem porösen Material aus dem Ventilmetall hergestellt ist; das Aufbringen des leitfähigen Beschichtungsmaterials nach Anspruch 26 auf die dielektrische Schicht; und das Trocknen des leitfähigen Beschichtungsmaterials umfasst, um auf der Oberfläche der dielektrischen Schicht eine Kathode zu bilden, die aus einer leitfähigen Zusammensetzung hergestellt ist.

29. Leitfähige Zusammensetzung nach Anspruch 1, wobei es sich bei dem π-konjugierten leitfähigen Polymer um mindestens eines handelt, das aus der Gruppe ausgewählt ist, die aus Polyacetylenen, Polyphenylenen, Polyphenylenvinylenen, Polyacenen, Polythiophenvinylenen und Copolymeren derselben besteht.

30. Leitfähige Zusammensetzung nach Anspruch 1, wobei es sich bei dem konjugierten leitfähigen Polymer um mindestens eines aus der Gruppe handelt, die aus Polypyrrolen, Polythiophenen und Polyanilinen besteht.

31. Leitfähige Zusammensetzung nach Anspruch 1, wobei es sich bei der Polymerverbindung mit Cyanogruppe um ein Copolymer aus einem Monomer mit Cyanogruppe und einem Monomer mit Vinylgruppe handelt, bei welchem es sich um mindestens eines handelt, das aus der Gruppe ausgewählt ist, die aus Vinylhalogenidverbindungen, aromatischen Vinylverbindungen, heterocyclischen Vinylverbindungen, aliphatischen Vinylverbindungen, Acrylverbindungen, Dienverbindungen und Maleimidverbindungen besteht.

32. Leitfähige Zusammensetzung nach Anspruch 1, wobei das π-konjugierte leitfähige Polymer substituiertes oder unsubstituiertes Polythiophen umfasst.

## Revendications

1. Composition conductrice comprenant un polymère conducteur n-conjugué et un composé polymère contenant un groupe cyano, qui est un copolymère d'un monomère contenant un groupe cyano et d'un monomère contenant un groupe vinyle, dans laquelle
un rapport molaire de copolymérisation du monomère contenant un groupe cyano au monomère contenant un groupe vinyle dans le composé polymère contenant un groupe cyano est compris entre 99:1 et 10:90, et
un rapport en masse du composé polymère contenant un groupe cyano au polymère conducteur π-conjugué est compris entre 5:95 et 99:1.

2. Composition conductrice selon la revendication 1, comprenant en outre un dopant.

3. Composition conductrice selon la revendication 1, dans laquelle le monomère contenant un groupe cyano est au moins l'un de l'acrylonitrile et du méthacrylonitrile.

4. Composition conductrice selon la revendication 1, dans laquelle le monomère contenant un groupe vinyle est au moins un sélectionné dans le groupe constitué par les composés d'halogénure vinylique, les composés vinylaromatiques, les composés vinylhétérocycliques, les composés vinylaliphatiques, les composés acryliques, les composés diènes et les composés maléimides.

5. Composition conductrice selon la revendication 1, dans laquelle le polymère conducteur π-conjugué comprend au moins un sélectionné dans le groupe constitué par le polypyrrole, le polythiophène, le poly N-méthylpyrrole, le poly 3-méthylthiophène et le poly 3-méthoxythiophène.

6. Matériau de revêtement conducteur comprenant la composition conductrice selon la revendication 1 et un solvant organique, la composition conductrice étant dissoute dans le solvant organique.

7. Résine conductrice comprenant la composition conductrice selon la revendication 1 et une résine isolante, la composition conductrice étant mélangée avec la résine isolante.

8. Résine conductrice selon la revendication 7, dans laquelle une différence de valeur SP entre le composé polymère contenant un groupe cyano et la résine isolante est de 0 ou plus et de 2 ou moins.

9. Composition conductrice selon la revendication 1, laquelle composition conductrice comprend en outre un agent de vulcanisation capable de réagir avec un groupe cyano.

10. Composition conductrice selon la revendication 9, dans laquelle le composé polymère contenant un groupe cyano est un copolymère du monomère contenant un groupe cyano et du monomère contenant un groupe vinyle.

11. Composition conductrice selon la revendication 1, dans laquelle le monomère contenant un groupe vinyle est un monomère contenant un groupe vinyle ayant un groupement fonctionnel, et la composition conductrice comprend en outre un agent de vulcanisation capable de réagir avec au moins l'un d'un groupe cyano et du groupement fonctionnel.

12. Composition conductrice selon la revendication 11, dans laquelle le groupement fonctionnel est au moins un sélectionné dans le groupe constitué par le groupe sulfo, le groupe carboxyle, le groupe hydroxyle, le groupe époxy et le groupe amino.

13. Composition conductrice selon la revendication 10 ou 11, dans laquelle le monomère contenant un groupe cyano est au moins l'un de l'acrylonitrile et du méthacrylonitrile.

14. Composition conductrice selon la revendication 9 ou 11, comprenant en outre un dopant.

15. Composition conductrice selon la revendication 9 ou 11, dans laquelle le polymère conducteur π-conjugué est au moins un sélectionné dans le groupe constitué par le polypyrrole, le polythiophène, le poly N-méthylpyrrole, le poly 3-méthylthiophène et le poly 3-méthoxythiophène.

16. Matériau de revêtement conducteur comprenant la composition conductrice selon la revendication 9 ou 11 et un solvant organique, la composition conductrice étant dissoute dans le solvant organique.

17. Résine conductrice comprenant la composition conductrice selon la revendication 9 ou 11 et une résine isolante, la composition conductrice étant mélangée avec la résine isolante.

18. Résine conductrice selon la revendication 17, dans laquelle une différence de valeur SP entre le composé polymère contenant un groupe cyano et la résine isolante est de 0 ou plus et de 2 ou moins.

19. Composition conductrice comprenant une charge conductrice, un mélange conducteur d'un composé polymère contenant un groupe cyano, qui est un copolymère d'un monomère contenant un groupe cyano et d'un monomère contenant un groupe vinyle, et un polymère conducteur π-conjugué.

20. Composition conductrice selon la revendication 19, dans laquelle la surface de la charge conductrice est recouverte du polymère conducteur π-conjugué.

21. Composition conductrice selon la revendication 19, comprenant en outre un dopant.

22. Composition conductrice selon la revendication 19, dans laquelle la charge conductrice a au moins l'un d'un groupe sulfo et d'un groupe carboxyle sur la surface.

23. Composition conductrice selon la revendication 19, dans laquelle un rapport en masse du composé polymère contenant un groupe cyano au polymère conducteur π-conjugué est compris entre 5:95 et 99:1.

24. Composition conductrice selon la revendication 19, dans laquelle un rapport en masse du mélange conducteur à la charge conductrice est compris entre 50:50 et 99,9:0,1.

25. Procédé de préparation d'une composition conductrice, qui comprend la polymérisation d'un monomère précurseur d'un polymère conducteur π-conjugué en présence d'un composé polymère contenant un groupe cyano, qui est copolymère d'un monomère contenant un groupe cyano et d'un monomère contenant un groupe vinyle, pour donner un mélange conducteur, et le mélange du mélange conducteur avec une charge conductrice.

26. Matériau de revêtement conducteur comprenant la composition conductrice selon la revendication 19, et de l'eau ou un solvant organique.

27. Condensateur comprenant une anode constituée d'un matériau poreux d'un métal de soupape ; une couche diélectrique constituée d'un film d'oxyde du métal de soupape, qui est adjacent à l'anode ; et une cathode constituée de la composition conductrice selon la revendication 19.

28. Procédé de production d'un condensateur, qui comprend la formation, sur une anode constituée d'un matériau poreux d'un métal de soupape, d'une couche diélectrique constituée d'un film d'oxyde du métal de soupape ; l'application du matériau de revêtement conducteur selon la revendication 26 sur la couche diélectrique ; et le séchage du matériau de revêtement conducteur pour former une cathode constituée d'une composition conductrice sur la surface de la couche diélectrique.

29. Composition conductrice selon la revendication 1, dans laquelle le polymère conducteur π-conjugué est au moins un sélectionné dans le groupe constitué par les polyacétylènes, les polyphénylènes, les polyphénylènevinylènes, les polyacènes, les polythiophènevinylènes et les copolymères de ceux-ci.

30. Composition conductrice selon la revendication 1, dans laquelle le polymère conducteur π-conjugué est au moins un sélectionné dans le groupe constitué par les polypyrroles, les polythiophènes et les polyanilines.

31. Composition conductrice selon la revendication 1, dans laquelle le composé polymère contenant un groupe cyano est un copolymère d'un monomère contenant un groupe cyano et d'un monomère contenant un groupe vinyle, qui est au moins un sélectionné dans le groupe constitué par les composés d'halogénure vinylique, les composés vinylaromatiques, les composés vinylhétérocycliques, les composés vinylaliphatiques, les composés acryliques, les composés diènes et les composés maléimides.

32. Composition conductrice selon la revendication 1, dans laquelle le polymère conducteur π-conjugué comprend du polythiophène substitué ou non substitué.
